Europäisches Patentamt

European Patent Office

Office européen des brevets

(11) Publication number: **0 243 552**
**A1**

# EUROPEAN PATENT APPLICATION

(21) Application number: **86307540.4**

(22) Date of filing: **01.10.86**

(51) Int. Cl.⁴: **G01B 11/04 , A63H 33/38**

(30) Priority: **08.04.86 US 849530**

(43) Date of publication of application:
**04.11.87 Bulletin 87/45**

(84) Designated Contracting States:
**DE ES FR GB IT NL**

(71) Applicant: **MANN, Phillip**
**84, Calvert Street**
**Harrison New York 10528(US)**

(72) Inventor: **MANN, Phillip**
**84, Calvert Street**
**Harrison New York 10528(US)**

(74) Representative: **Williams, Trevor John et al**
**J.A. KEMP & CO. 14 South Square Gray's Inn**
**London WC1R 5EU(GB)**

(54) **Stencil book.**

(57) A book for children comprises a front cover (12), a back cover (14; 14″) and a plurality of sheets (16) forming a succession of pages (18, 20; 18′,20′; 18″; 20″; 18‴, 20‴ ) between the front cover and the back cover. The sheets (16) are die cut to form a stencil (S) and define a work page (20; 20′; 20″; 20‴) bearing an illustration related to the stencil. A tutorial page (16; 16′; 16″; 16‴) adjacent to the work page and visible together with the work page when the book is opened to the work page illustrates the appearance of an image when properly drawn with the aid of the stencil. A binding (26) for the covers and sheets enables the book to be opened to any of the pages and to lie with both of the covers and all of the pages flat. This facilitates the use of the book as a stencil book.

FIG.1

EP 0 243 552 A1

## STENCIL BOOK

This invention relates to books and, more particularly, to a novel and highly-effective book for children having features that facilitate its use as a stencil book.

### Description of the Prior Art

Stenciling is a valuable exercise for young children. It teaches hand-eye coordination and imparts information about the letters or other shapes that are being stenciled.

Conventional stencil aids, however, are not well adapted for use by young children. They tend to be inconvenient to use, because either they are not assembled and must be searched for individually as needed or they are assembled in such a manner that they cannot be used individually except with the exercise of more dexterity than a young child is likely to possess. Moreover, conventional stencil aids are generally available only in isolation from illustrations, explanations and other auxiliary teaching materials of benefit to young children.

### OBJECTS AND SUMMARY OF THE INVENTION

An object of the invention is to remedy the shortcomings of conventional stencil aids noted above and in particular to provide a stencil aid that is especially attractive to, and adapted to the needs of, young children.

Another object of the invention is to provide a stencil aid that includes auxiliary teaching materials of benefit to young children.

### BRIEF DESCRIPTION OF THE DRAWING

A better understanding of the objects, features and advantages of the invention can be gained from the following detailed description of the preferred embodiments thereof, wherein a given reference character always represents the same element or part, and wherein:

Fig. 1 is a front perspective view of a book for children in the closed state;

Fig. 2 is a plan view of the book of Fig. 1 in the open state;

Fig. 3 is a sectional view taken substantially along the line 3-3 of Fig. 2 and looking in the direction of the arrows;

Fig. 4 is a plan view similar to Fig. 2 but showing another embodiment of the invention:

Fig. 5 is a plan view similar to Figs. 2, but showing another embodiment of the invention;

Fig. 6 is a view similar to Figs. 1, 4 and 5 but showing another embodiment of the invention; and

Fig. 7 is plan view of the back cover of a book constructed in accordance with the invention and containing a heuristic device.

### DESCRIPTION OF THE PREFERRED EMBODIMENTS

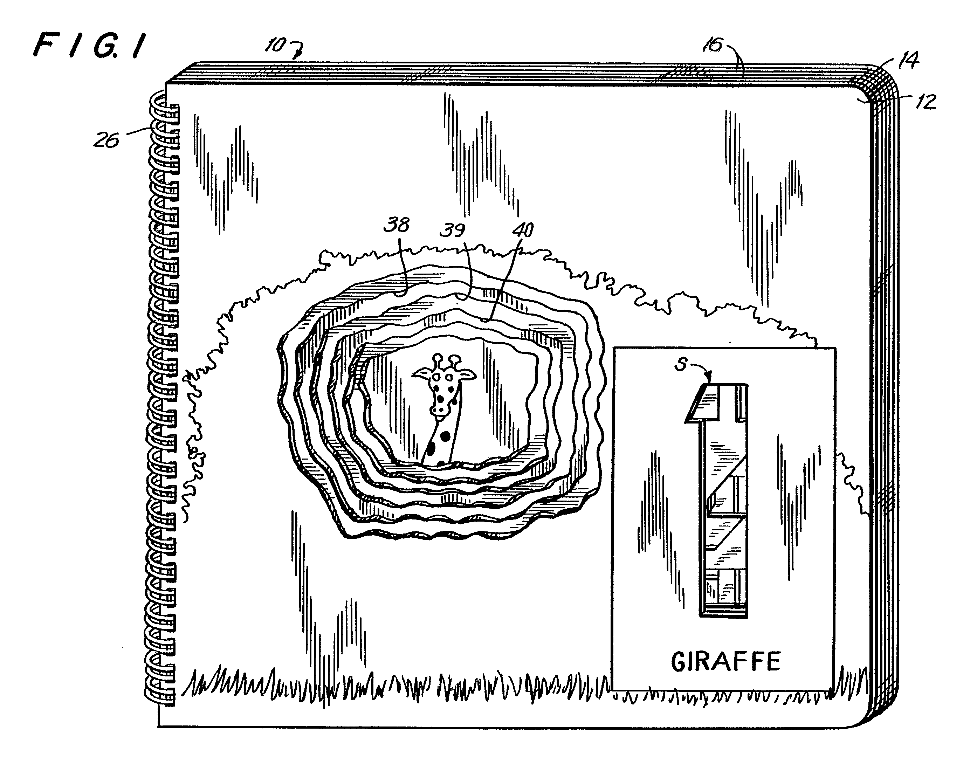

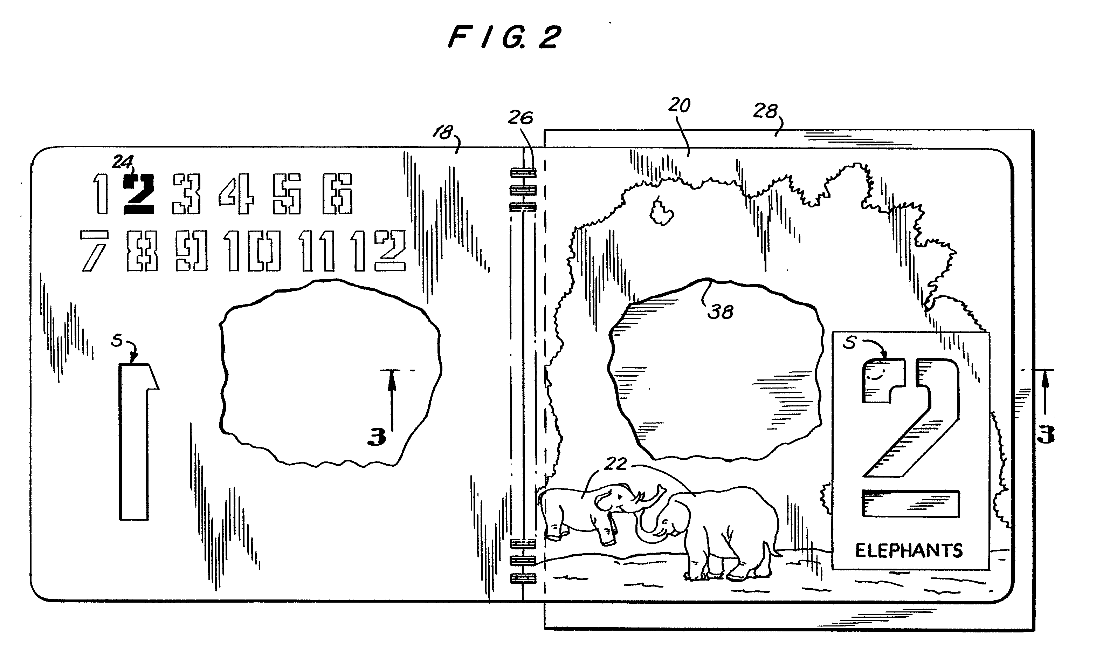

Fig. 1 shows a book 10 constructed in accordance with the invention. It comprises a front cover 12, a back cover 14, and plurality of sheets 16 forming a succession of pages 18, 20, etc. (Fig. 2), between the front cover 12 and the back cover 14.

The book 10 further comprises a spiral-type, ring-type or similar binding 26 for the covers 12, 14 and sheets 16 enabling the book 10 to be opened to any of the pages 18, 20, etc., and to lie with both of the covers 12, 14 and all of the pages 18, 20, etc., perfectly flat. This facilitates use of the book 10 as a stencil book, since the book 10 has no tendency to close while it is in use.

At least one and preferably all of the sheets 16 and even the covers 12, 14 are die cut to form a stencil S. For example, in Fig. 2, the sheet 16 the obverse side of which forms the page 20 is die cut to form a stencil S outlining the numeral "2". The page 20 is a work page bearing an illustration related to the stencil S. For example, a pair of elephants 22 illustrates the concept of the numeral "2".

The reverse side of the sheet 16 preceding the page 290 forms the page 18. The page 18 is a tutorial page adjacent to the work page 20 and visible together with the work page 20 when the book 10 is opened to the work page 20. The work page 20 is to the right of the tutorial page 18, thereby making it easy for a right-handed child to perform the stenciling while occasionally glancing at the tutorial page. The tutorial page 18 includes an illustration 24 showing on a reduced side the finished appearance of an image properly drawn with the aid of the stencil S.

As Fig. 2 shows, the stencil S may represent a number. A series of numbers, for example "1" to "12", may be included in the book as stencils respectively cut into sheets forming separate work pages. The tutorial page opposite each work page may include printed representations of all of the stencils, namely the numerals, "1" to "12" in the example, wherein the numeral corresponding to the stencil S on the associated work page is darkened or filled in with a solid color, the other numerals being left unshaded (i.e., in outline form). For example, as indicated in Fig. 2, all of the numerals "1" through "12" are represented on the tutorial page 18, but only the numeral "2" is darkened, the numerals "1" and "3" through "12" being left unshaded. This is a teaching aid that shows a young child what the stenciling looks like if done properly. The concept of the shape being stenciled is reinforced by seeing the stencil in a plurality of ways (die cut on the work page, filled in on the tutorial page, and filled in on the student's own work sheet at the completion of the stenciling).

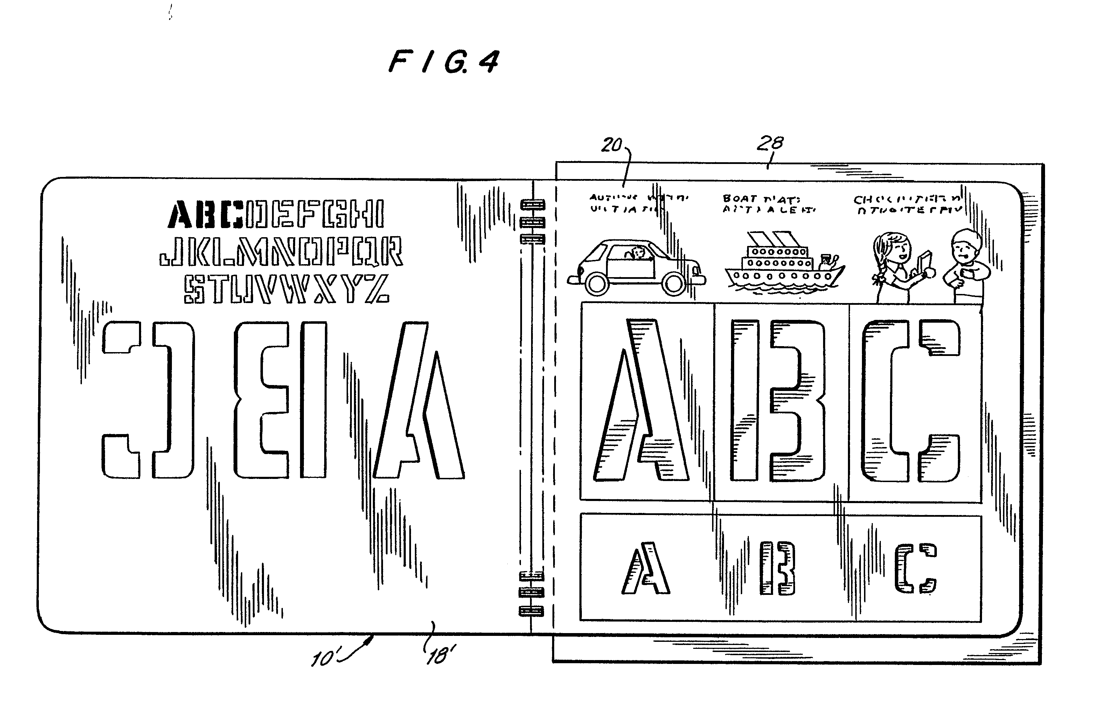

As an alternative to a stencil book of numbers, it is also possible to manufacture a stencil book of letters, as illustrated in Fig. 4. In Fig. 4, the work page 20' includes stencils representing three letters, namely "A", "B", and "C". The tutorial page 18' includes those letters plus the remaining letters of the alphabet. The letters "A", "B", and "C" are filled in on the tutorial page 18', for example in a dark solid color, and the remaining letters are left unshaded.

The work page 20' includes illustrations respectively associated with these stencils: for example, an illustration of an automobile in association with the stencil representing the letter "A", an illustration of a boat in association with the stencil representing the letter "B", and an illustration of chocolate in association with the stencil representing the letter "C". The same letters appear in smaller form below the large letters. It is also possible, of course, to substitute lower case letters, Greek letters, etc.

Succeeding pages of the book 10' of Fig. 4 represent succeeding letters of the alphabet on the work page previously grouped in units of three, appropriate illustrations relating thereto on the work page, and, on each tutorial page, all the letters of the alphabet with the three letters filled in corresponding to the stencils on the associated work page.

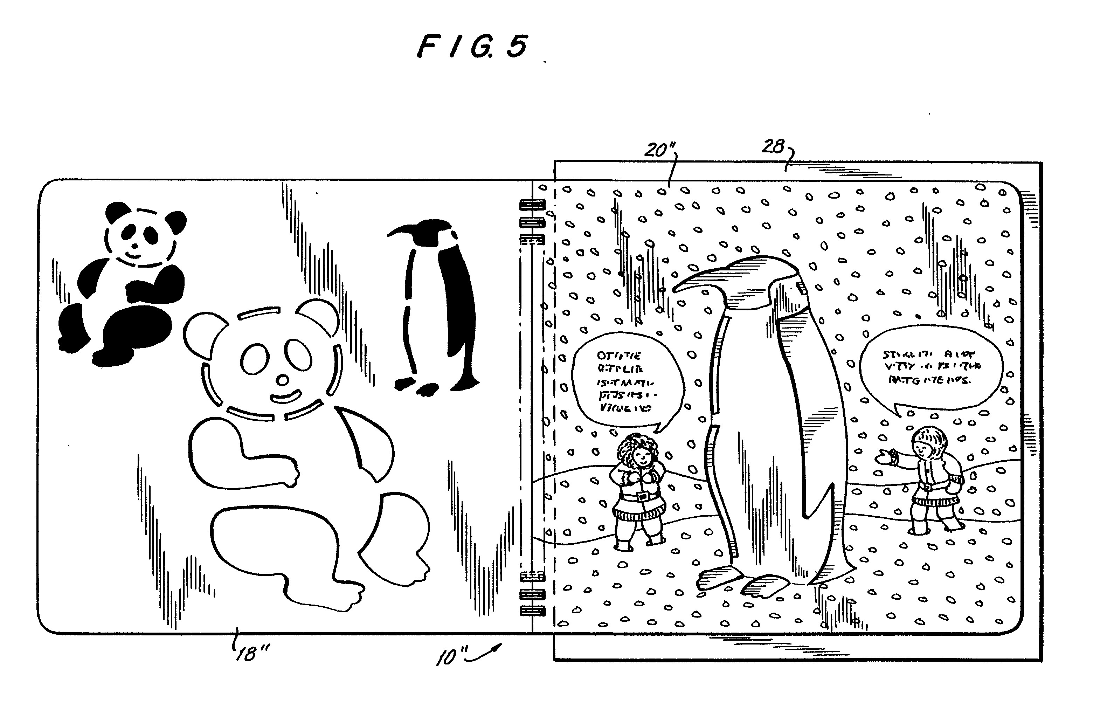

Fig. 5 shows another embodiment of a book 10' constructed in accordance with the invention and representing animals. A representative work page 20" includes a stencil representing an animal, for example a penguin. Cartoon characters on the work page are represented as giving information about the animal in question and its natural habitat. For example, in the case of the penguin, the cartoon characters may indicate that it is native to Antartica and the Antartica has a cold climate. The associated tutorial page 18' includes a representation of a penguin filled in to show what the completed stencil will look like if the child performs the stenciling properly.

A sheet of paper 28 is shown inserted beneath the work page 20" so that the stenciling can be performed.

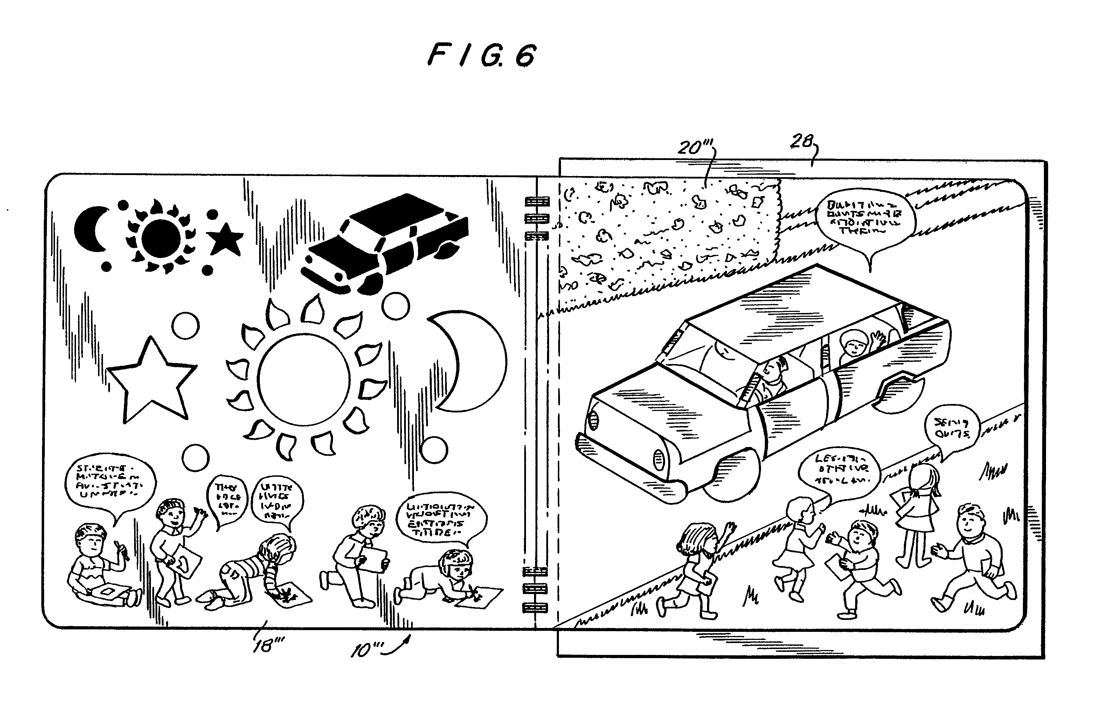

Fig. 6 shows another embodiment of a book 10''' constructed in accordance with the invention and opened to a representative tutorial page 18''' and work page 20'''. The work page 20''' includes a stencil representing a car on a roadway. Cartoon characters are represented as making comments appropriate to the situation depicted. The associated tutorial page 18''' includes a representation of a car as it will appear if the child performs the stenciling properly. Cartoon characters on the tutorial page 18''' are represented as making comments appropriate to the use of the stencil book.

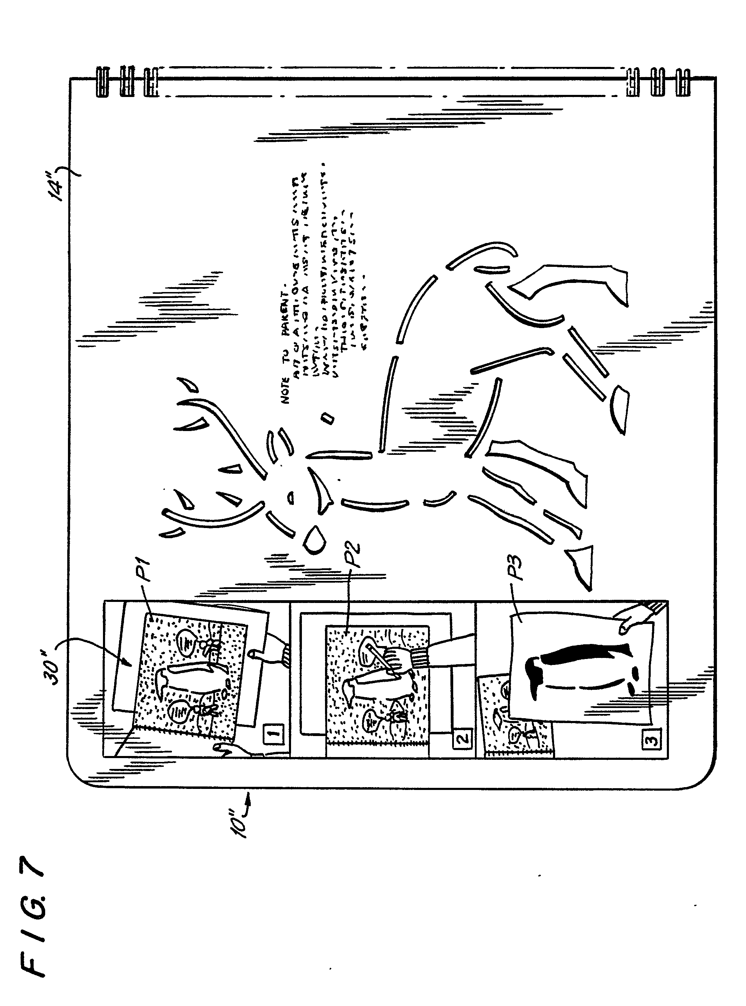

Fig. 7 shows a back cover 14" of the animal book 10". A teaching aid 30" illustrates in three panels the art of stenciling. In the first panel P1 is a representation of the work page 20" before stenciling begins. In a second panel P2 is a representation of the work page 20" as stenciling proceeds. In a third panel P3 contains a representation of the completed stencil.

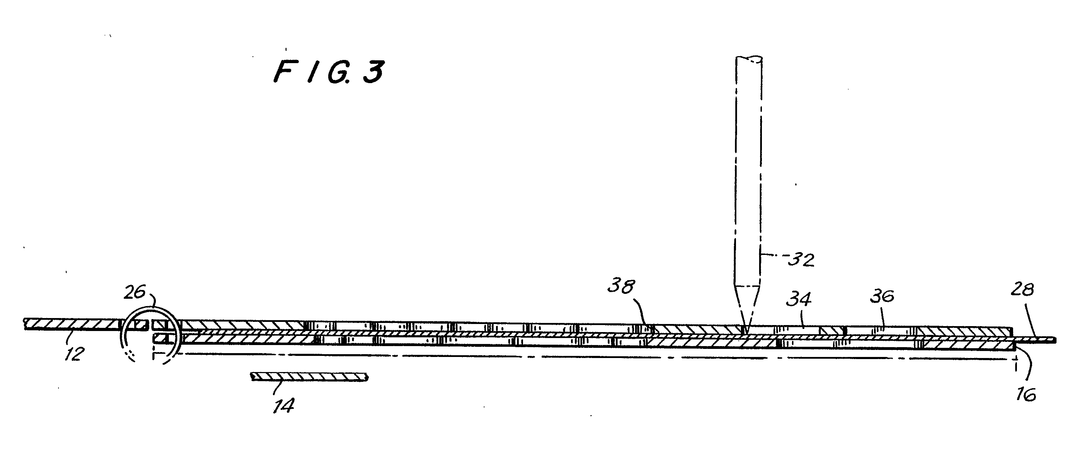

Fig. 3 shows the stenciling process. A pencil or crayon, etc., 32 is within a die-cut opening 34 tracing a portion of the outline of the numeral "2". An opening 36 representing another portion of the numeral "2" is also visible in Fig. 3. The paper 28 is also shown, as well as sheets 16 below the paper 28. The binding 26 enables all of the pages, as well as the front and back covers 12, 14, to lie flat.

It is within the scope of the invention to include a purely decorative opening 38. A plurality of such openings 38, 39, 40 etc., of progressively decreasing size may be provided to form a frame (Fig. 2) for a picture which is printed on the inside of the back cover and visible from the front of the book when the book is closed. The decorative stencil may be unrelated to the stencil representing the numeral, letter of the alphabet, animal or object, and lends interest to the book as an educational book for a young child.

Thus there is provided in accordance with the invention a novel a highly-effective book for children having features that facilitate its use as a stencil book. The book remedies the shortcomings of conventional stencil aids and in particular provides a stencil aid that is especially attractive to, and adapted to the needs of, young children. More particularly, in accordance with the invention a stencil aid is provided that includes anxiliary teaching materials of benefit to young children.

Many modifications of the preferred embodiments of the invention disclosed herein will readily occur to those skilled in the art. For example, it is possible to incorporate all of the features described above relating to numerals, letters, animals and objects into a single book. It is also possible to have different categories of books (for example, occupations, sports, foods, etc.). Accordingly, the invention is not limited except by the appending claims.

## Claims

1. A book for children comprising a front cover, a back cover, and a plurality of sheets forming a succession of pages between said front cover and said back cover; characterized in that at least one of said sheets (16) is cut to form a stencil (S) and defines a work page (20; 20'; 20"; 20''') bearing an illustration related to said stencil; a tutorial page (18; 18'; 18"; 18''') is provided adjacent to said work page and is visible together with said work page when said book is opened to said work page; said tutorial page illustrates (24, Fig. 2) the appearance of an image when properly drawn with the aid of said stencil; and a binding (26) is provided for said covers (12, 14) and sheets (16) and enables said book to be opened to any of said pages and to lie with both of said covers and all of said pages flat; thereby facilitating use of said book as a stencil book.

2. A book according to claim 1 characterized in that said stencil (S) represents a number (Figs. 1 and 2).

3. A book according to claim 1 characterized in that said stencil (S) represents a letter (Fig. 4).

4. A book according to claim 4-1 characterized in that said stencil (S) represent an animal (Fig. 5).

5. A book according to claim 1 characterized in that said stencil (S) represents an object (Fig. 6).

6. A book according to claim 1 characterized in that at least said front cover (12) is cut to form a stencil.

7. A book according to claim 1 characterized in that said work page (20; 20') is cut to form a second stencil (38; Fig. 4).

8. A book according to claim 7 characterized in that said stencil and said second stencil are unrelated (Fig. 2).

9. A book according to claim 1 characterized in that said work page (20; 20'; 20"; 20''') is to the right of said tutorial page (18; 18'; 18"; 18''').

10. A book according to claim 1 characterized in that said binder (26) is a spiral type.

11. A book according to claim 1 characterized in that said binder (26) is a ring type.

F I G. 1

GIRAFFE

# FIG. 2

1 2 3 4 5 6
7 8 9 10 11 12

2 ELEPHANTS

0 243 552

FIG. 3

26

38    34    36    28

12    14    32    16

0 243 552

# FIG. 4

ABCDEFGH
JKLMNOPQR
STUVWXYZ

C E A C

FIG. 5

F I G. 6

0 243 552

*FIG. 7*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 605 287 (JONESI) <br> * Figure 2; column 1, line 66 - column 2, line 50 * | 1-9 | G 01 B 11/04 <br> A 63 H 33/38 |
| A | US-A-3 135 059 (BARISH) <br> * Figures 1-12 * | 1 | |
| A | US-A-4 176 473 (RAE) <br> * Figures 4-8 * | 1,4,11 | |
| A | US-A-2 812 183 (SCHIFF) <br> * Figures 1-4 * | 1,5,6 | |
| A | FR-A-1 354 022 (HÖPFNER) <br> * Figure 5 * | 1,11 | |
| A | US-A-4 205 849 (PERKINS) <br> * Figure 1 * | 1-3 | TECHNICAL FIELDS SEARCHED (Int. Cl.4) <br><br> A 63 H <br> G 01 B |

The present search report has been drawn up for all claims

| Place of search | Date of completion of the search | Examiner |
|---|---|---|
| THE HAGUE | 12-08-1987 | RAKOWICZ, J.M. |